Europäisches Patentamt

European Patent Office

Office européen des brevets

(19)

(11) Numéro de publication: **0 073 543**
**A2**

## (12) DEMANDE DE BREVET EUROPEEN

(21) Numéro de dépôt: **82201041.9**

(22) Date de dépôt: **19.08.82**

(51) Int. Cl.³: **H 04 M 1/65**

(30) Priorité: **28.08.81 CH 5541/81**

(43) Date de publication de la demande: **09.03.83**
**Bulletin 83/10**

(84) Etats contractants désignés: **AT BE CH DE FR GB IT LI LU NL SE**

(71) Demandeur: **Piquerez, Jacques, Villa l'Esterel, CH-1033 Cheseaux (CH)**

(72) Inventeur: **Piquerez, Jacques, Villa l'Esterel, CH-1033 Cheseaux (CH)**

(74) Mandataire: **Meylan, Robert Maurice et al, c/o BUGNION S.A. 10, route de Florissant Case Postale 375, CH-1211 Genève 12 - Champel (CH)**

(54) **Système de transmission d'informations entre un appareil de téléphone et une personne éloignée de son appareil.**

(57) Le système comprend d'une part, associés à l'appareil de téléphone de l'abonné, des moyens de réception et de décodage d'un signal d'interrogation émanant d'un poste éloigné et d'autre part, un dispositif portalif, par exemple logé dans une boîte de montre, comprenant un microphone (1), des moyens de réception et de décodage (3 à 6) des signaux à fréquence sonore transmis par la ligne téléphonique et par l'écouteur de l'appareil éloigné. Le dispositif portatif comprend en outre des moyens de mémorisation (7) et de reproduction, par exemple d'affichage (14) des informations reçues. Le signal d'interrogation peut être par exemple composé au moyen du disque de l'appareil éloigné ou émis sous forme d'un signal sonore transmis par l'écouteur du combiné.

- 1 -

Système de transmission d'informations entre un appareil de téléphone et une personne éloignée de son appareil.

La présente invention a pour objet un système de transmission d'informations entre un appareil de téléphone équipé d'un répondeur automatique avec enregistreur et une personne éloignée de son appareil, ainsi qu'un dispositif portatif pour l'obtention à distance d'informations reçues par un tel appareil de téléphone.

Il est connu de commander un appareil au moyen d'un signal transmis à son appareil téléphonique depuis un appareil éloigné quelconque. On peut commander ainsi par exemple la mise en route et l'arrêt d'une installation de chauffage au moyen d'un signal composé au moyen du disque de sélection d'un appareil de téléphone quelconque.

Il serait intéressant pour l'usager, loin de son domicile ou de son bureau, de pouvoir obtenir immédiatement des informations, en particulier des messages téléphoniques reçus en son absence par son appareil téléphonique et enregistrés au moyen d'un répondeur automatique équipé d'un enregistreur. La présente invention a précisément pour but d'apporter une solution à ce problème.

Le système selon l'invention est caractérisé par le fait qu'il comprend, associés à l'appareil de téléphone, des moyens de réception et de décodage d'un signal d'interrogation reçu par la ligne téléphonique et des moyens d'émission, sur la ligne téléphonique, des informations enregistrées, sous forme de signaux à fréquence sonore codés, et, éloigné de l'appareil de téléphone émetteur, un dispositif portatif comprenant d'une part, des moyens d'émission d'un signal sonore, notamment d'un signal d'interrogation, et, d'autre part, des moyens de réception et de décodage des signaux à fréquence sonore codés transmis par la ligne téléphonique et par l'écouteur d'un appareil de téléphone éloigné de l'appareil émetteur et des moyens de reproduction des informations reçues.

Les informations sont de préférence transmises sous une forme numérique binaire au moyen de deux fréquences sonores dans la bande de fréquence sonore de la ligne téléphonique.

Le dispositif récepteur portatif peut être judicieusement monté dans une boîte de montre portée au poignet et les moyens de reproduction comprendront de préférence un affichage à cristaux liquides à glissement.

Le dessin annexé représente, à titre d'exemple, une forme d'exécution de l'invention.

La figure 1 représente le schéma-bloc du dispositif portatif de réception.

La figure 2 représente schématiquement une forme d'exécution du dispositif portatif de réception équipé d'un émetteur sonore de signal d'interrogation.

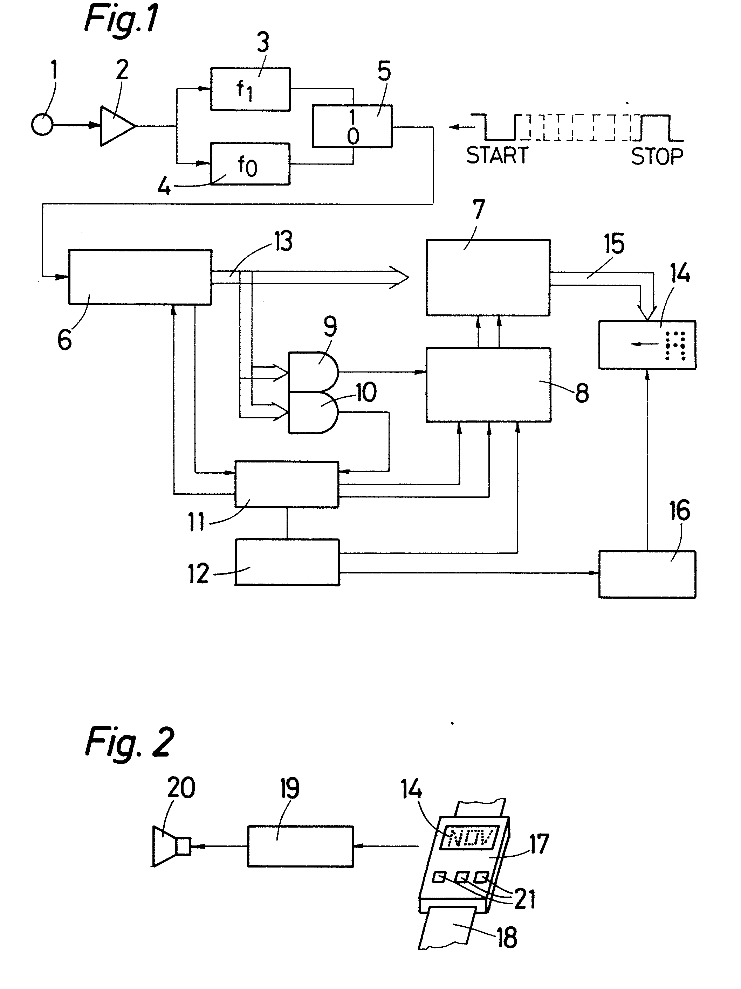

Le dispositif représenté à la figure 1 comprend un microphone 1, un amplificateur 2, un premier détecteur de fréquence 3 accordé à une première fréquence F1 et un second détecteur 4 accordé à une seconde fréquence F0, un transformateur binaire 5 transformant chaque signal de fréquence F1 en un chiffre 1 de chaque signal de fréquence F0 en un chiffre 0, un récepteur universel asynchrone 6 pour la détection et le décodage des signaux binaires reçus du circuit 5, une mémoire 7 à laquelle est associé un registre d'adresses 8, un détecteur de début de message 9, un détecteur de fin de message 10, un circuit de commande et de synchronisation de la transmission des données 11, un circuit 12 de contrôle et de commande du registre 8, un bus 13 pour la transmission des signaux du récepteur 6 à la mémoire 7, un affichage 14 à glissement, à cristaux liquides ou à diodes luminescentes, une ligne 15 de transmission des signaux lus dans la mémoire 7 au dispositif d'affichage 14 et un circuit 16 de contrôle de l'affichage 14 commandé par le circuit 12. Les informations transmises par la ligne téléphonique sont transmises sous forme codée au moyens de deux fréquences sonores ou vocales F1 et F0 par la technique de manipulation par déplacement de fréquences. L'utilisation de deux fréquences permet une transmission sous forme numérique binaire immédiatement utilisable et mémorisable. Le début du message est indiqué par exemple par une longue impulsion de fréquence F0, tandis que la fin du message est signalé par une longue impulsion de fréquence F1.

Dans sa forme la plus simple, telle que représentée à la figure 1, le dispositif de réception portatif ne comprend pas d'émetteur de signal d'interrogation. Lorsque le porteur du dispositif désire interroger son poste d'abonné, il appelle ce poste d'abonné depuis un appareil de téléphone quelconque, puis il envoie un signal d'interrogation en composant ce signal au moyen du disque de sélection ou des touches du clavier de sélection du poste où il se trouve. Le poste d'abonné réagit alors en émettant le signal codé sous la forme de deux fréquences sonores F1 et F0 sur la ligne. Il suffit alors au porteur du dispositif récepteur de placer celui-ci sur ou près de l'écouteur du combiné pour capter le message transmis. Ce message est détecté et décodé au moyen des circuits représentés à la figure 1, dont les éléments représentés sont bien connus en soi de l'homme de l'art, un message décodé étant affiché sur le dispositif d'affichage à glissement 14 sur lequel lettres et chiffres défilent de droite à gauche. Les informations reçues peuvent être conservées en mémoire, soit dans la mémoire 7, soit dans une mémoire auxiliaire.

Au lieu d'une transmission par manipulation par déplacement de fréquences, il est bien entendu possible d'utiliser tout autre mode de transmission de signaux connu. A titre d'exemple, on peut citer un signal de fréquence F0 modulé en fréquence, en amplitude ou en impulsions, le codage à multi-fréquences, un signal à fréquence fixe modulé en largeur, etc.

Quant au code utilisé, il peut être un code ASCII ou EBCDIC ou tout autre code spécial.

Le message enregistré dans la mémoire 7 peut être lu et affiché à volonté ou jusqu'à ce qu'il soit effacé par un nouveau message. Le nombre de messages mémorisable dépend de la capacité de la mémoire.

Le dispositif récepteur est avantageusement logé dans un boîtier porté en permanence par l'utilisateur, par exemple au poignet. Ce boîtier peut être une boîte de montre contenant, en plus du dispositif récepteur, une base de temps et un affichage de l'heure.

Au lieu d'envoyer le signal d'interrogation sous la forme d'impulsions de sélection, il est possible d'envoyer ce signal d'interrogation sous la forme d'un signal à fréquence sonore constitué par exemple de deux fréquences comme le signal reçu. La figure 2 illustre schématiquement une telle exécution. On a représenté le dispositif récepteur sous la forme d'un boîtier 17 fixé à un bracelet 18. En plus des éléments représentés à la figure 1, le boîtier 17 contient un générateur de fréquence 19 et un transducteur électro-acoustique miniature 20. Sur le boîtier 17, sont prévues des touches 21 dont l'une au moins est prévue pour enclencher de la générateur de fréquence 19 pour l'émission du signal d'interrogation sous forme sonore par le transducteur 20. En plaçant le dispositif 17 sur ou près du micro du combiné téléphonique, le signal d'interrogation est transmis au poste d'abonné éloigné. L'une des touches 21 peut être utilisée pour la commande de l'affichage. Il est bien entendu possible de prévoir plusieurs touches d'interrogation émettant des signaux d'interrogation différents permettant d'atteindre des postes d'abonnés de codes différents. Il est également possible d'utiliser les trois touches 21 représentées pour commander individuellement trois générateurs de fréquences émettant sur trois fréquences différentes et de composer le signal d'interrogation codé au moyen des trois touches.

Si le poste d'abonné est équipé d'un dispositif d'identification de la voix de l'abonné, il est possible pour l'abonné de transmettre le signal d'interrogation sous la forme d'un mot code ou d'un ensemble de mots codes parlés dans le combiné.

Selon une variante d'exécution, le boîtier porté au poignet peut être avantageusement complété par un appareil auxiliaire se présentant sous la forme d'une calculatrice de poche et comprenant un dispositif d'affichage, un clavier et un circuit comprenant une mémoire, un circuit de codage et éventuellement un circuit de réception et de décodage. Cet appareil auxiliaire peut être connecté au boîtier pour l'introduction d'informations destinées à être transmises sous forme sonore à l'appareil téléphonique éloigné. Il permet également de stocker des informations reçues par le boîtier et de les afficher sous forme plus grande.

Revendications de brevet.

1. Système de transmission d'informations entre un appareil de téléphone équipé d'un répondeur automatique avec enregistreur et une personne éloignée de son appareil, caractérisé par le fait qu'il comprend, associés à l'appareil de téléphone, des moyens de réception et de décodage d'un signal d'interrogation reçu par la ligne téléphonique et des moyens d'émission, sur la ligne téléphonique, des informations enregistrées, sous forme de signaux à fréquence sonore codés (f0, f1), et, éloigné de l'appareil de téléphone émetteur, un dispositif portatif comprenant, d'une part, des moyens d'émission (19, 20, 21) d'un signal sonore, notamment d'un signal d'interrogation, et, d'autre part, des moyens de réception (1, 5) et de décodage (6) des signaux à fréquence sonore codés (f0, f1) transmis par la ligne téléphonique et par l'écouteur d'un appareil de téléphone éloigné de l'appareil émetteur et des moyens de reproduction (11 à 16) des informations reçues.

2. Système selon la revendication 1, caractérisé par le fait que les informations sont transmises sous forme numérique binaire au moyen de deux fréquences sonores (f0, f1) dans la bande de fréquence sonore de la ligne téléphonique.

3. Système selon l'une des revendications 1 ou 2, caractérisé par le fait que le dispositif portatif comprend des moyens (21, 19) pour la composition et l'émission d'un signal d'interrogation sous la forme d'au moins une fréquence sonore dans la bande de fréquence téléphonique.

4. Système selon la revendication 1 ou 2, caractérisé par le fait que le signal d'interrogation est constitué

de mots parlés et que l'appareil interrogé est équipé d'un dispositif d'identification de voix.

5. Dispositif portatif pour l'échange, à distance, d'informations avec un appareil de téléphone équipé d'un répondeur automatique avec enregistreur, caractérisé par le fait qu'il comprend , d'une part, des moyens d'émission d'un signal sonore (19, 20, 21), nottamment d'un signal d'interrogation et, d'autre part, des moyens de réception comprenant un microphone (1), des moyens de réception (5)et de décodage (6) de signaux de fréquence sonore codés (f0, f1) transmis par la ligne téléphonique et par l'écouteur d'un appareil de téléphone et des moyens de reproduction (11 à 16) des informations reçues.

6. Dispositif selon la revendication 1, caractérisé par le fait que les moyens d'interrogation (19, 21) de l'appareil de téléphone émetteur comprennent un émetteur (19) de signaux sonores codés dans la bande de fréquence téléphonique et un clavier (21) pour la composition des signaux d'interrogation.

7. Dispositif selon la revendication 5 ou 6, caractérisé par le fait que les moyens de reproduction sont constitués par un dispositif d'affichage optique (14) à glissement.

8. Dispositif selon la revendication 5 ou 6, caractérisé par le fait que les moyens de reproduction sont constitués par un synthétiseur de fréquences et un haut-parleur.

9. Dispositif selon l'ensemble des revendications 5, 6 et 7, caractérisé par le fait que les moyens de réception et de décodage comprennent deux détecteurs de fréquences (3, 4) détectant chacun un signal de fré-

- 3 -

0073543

quence déterminée, constituant ensemble un signal numérique binaire, un récepteur universel asynchrone (6) assurant le décodage, une mémoire (7) pour l'enregistrement des signaux numériques décodés et un circuit de commande (11) de la lecture de la mémoire et de l'affichage (14).

10. Dispositif selon l'une des revendications 5 à 9, caractérisé par le fait qu'il est monté dans un boîtier (17) muni d'un bracelet pour sa fixation au poignet.

11. Dispositif selon la revendication 9, caractérisé par le fait que ledit boîtier est une boîte de montre.

12. Dispositif selon la revendication 10, caractérisé par le fait qu'il comprend en outre un dispositif auxiliaire pour l'introduction d'informations codées dans le dispositif monté dans ledit boîtier, ce dispositif auxiliaire comprenant un clavier et des moyens d'affichage.

13. Dispositif selon la revendication 12, caractérisé par le fait que le dispositif auxiliaire comprend une mémoire pour le stockage des informations reçues.

0073543

## Fig.1

START          STOP

## Fig. 2